Europäisches Patentamt

(19) European Patent Office

Office européen des brevets

(11) Publication number: **0 267 296 B1**

(12) EUROPEAN PATENT SPECIFICATION

(45) Date of publication of patent specification: **30.09.92** (51) Int. Cl.⁵: **C02F 1/48**

(21) Application number: **87902762.1**

(22) Date of filing: **01.05.87**

(86) International application number:
**PCT/JP87/00277**

(87) International publication number:
**WO 87/06925 (19.11.87 87/25)**

(54) **METHOD AND DEVICE FOR IONIZING LIOUID.**

(30) Priority: **06.05.86 JP 103439/86**
**05.08.86 JP 182732/86**

(43) Date of publication of application:
**18.05.88 Bulletin 88/20**

(45) Publication of the grant of the patent:
**30.09.92 Bulletin 92/40**

(84) Designated Contracting States:
**AT BE CH DE FR GB IT LI LU NL SE**

(56) References cited:
**DE-A- 3 134 967**
**FR-A- 2 445 300**
**US-A- 2 687 996**
**US-A- 4 325 798**
**US-A- 4 789 103**

**Common Building Defects - diagnosis &
remedy published 1983 by Longman Group
UK Limited, pages 115 and 117**

**Heating and Hot-Water Services, Fourth Re-**

**vised Edition, published 1980 by Granada
Publishing Limited, page 207**

**Brochure about Oracstar stainless steel
gauze filter sample of recent manufacture.**

**Fielder Systems leaflet dated 1.1.87**

**Intermediate Chemistry by Lowry and Cavell,
published 1939, pages 597 and 598**

(73) Proprietor: **IBBOTT, Jack Kenneth
17-7, Nishiazabu 4-chome Minato-ku
Tokyo 106(JP)**

(72) Inventor: **IBBOTT, Jack Kenneth
17-7, Nishiazabu 4-chome Minato-ku
Tokyo 106(JP)**

(74) Representative: **Charlton, Peter John et al
Elkington and Fife Prospect House 8 Pem-
broke Road
Sevenoaks, Kent TN13 1XR(GB)**

## Description

The present invention relates to method and device for ionizing fluid such as water. More particularly, the present invention relates to a method and device for ionization by employing the principle of electric energy flowing in such fluid.

Conventionally, those skilled in the art have known well that ionized fluid such as ionized water provides various effects. For example in a steel water pipe system, scale mainly consisting of ferric oxide is deposited on the inner wall of the steel pipe, thereby reducing the inner diameter with resulting reduced flow rate and pressure. It is well known that ionized water is used to remove the scale. When ionized water flows through the pipe, the oxide scale deposited on the inner wall is changed into a soft hydroxide (ferric hydroxide) which is removed gradually.

Also, it is well known that ionized water provides a cleaning effect. As a brief explanation on this cleaning effect, soap forms a colloidal solution in water, and is in fact an electrolyte, and becomes strongly ionized and there is a separation of the minus and plus ions. In the case of oils such as body oils and other forms of oily substances the difficulty of washing or removing these oils is due to the strong surface tension which they exhibit, add this strong surface tension is the result of strong internal charge bonding between the molecules. When a soap solution is added to this oil, the ionized soap solution breaks the surface tension of the oil solution. The ionic charge of the soap solution is stronger than the internal charge between the oil moleculars. This causes the oily substances to be easily absorbed and carried away by the water. Accordingly, an ionized solution such as water wherein the minus and plus ion charges are generated can provide a similar cleaning effect to that of the soap solution on oily substances.

In order to improve the agricultural conditions, the effect of adding ionizing compounds and materials to the soil has been well known and commonly used in plant foods and as ionizing pellets to be added to the soil. Ionized water can increase the ionic concentration of the soil as compared to the pellets, and it can be more easily absorbed by the plant.

There are many devices for ionizing water such as shown in U.S. patents No. 3026259, No. 3342712, No. 3686092 and No. 4325798. In these known devices, two materials having different electrochemical potentials are connected together at one ends thereof directly or through a high conductive material to form a so-called galvanic coupling. The device is put in a stream of the water pipe to allow the water to pass through the space between the two electrode materials, so that the water is ionized and prevent the scale from being deposited on the inner surface of the water pipe.

For example, in U.S. patent 4325798 of the above listed prior art, a plurality of generally rectangular copper plates and magnesium plates are provided. These copper plates and magnesium plates are connected together by a metal electrical conducting bolt and nut through a plurality of copper washers on the bolt that hold the copper plates and magnesium plates in laterally spaced relationship. The copper plates and magnesium plates constitute two electrodes of the galvanic coupling and ionize water which contacts the both plates.

Another type of device is also known from British patent 1288552, in which two materials having different electrochemical potentials are disposed to be electrically insulated from each other but for a connection through a resistor provided external to both materials. Water between the two electrode materials is ionized while passing through the space therebetween, thus preventing the deposition of scale.

According to the present invention there is provided a method for ionizing an electroconductive fluid, said method comprising:

providing a first electroconductive member and a second electroconductive member with an enclosed space therebetween, the first and second electroconductive members having different electrochemical potentials; flowing electroconductive fluid through the enclosed space between the first and second electroconductive members; forming an electroconductive connection between said first and second electroconductive members, thereby causing electrical energy to flow into the fluid to ionize it; characterized in that the electroconductive connection between the first and second electroconductive members is only through the electroconductive fluid.

The invention also provides a device for ionizing an electroconductive fluid, said device comprising:

a negative electrode comprising a first electroconductive member;

a positive electrode comprising a second electroconductive member, the first and second electroconductive members having an enclosed space therebetween;

an inlet for electroconductive fluid into the said enclosed space; and

a separate outlet for electroconductive fluid from the said enclosed space;

the first and second electroconductive members having different electroconductive potentials;

wherein in use electroconductive fluid such as water flows through the said enclosed space; and

wherein the only electroconductive connection between the first and second electroconductive members is through the fluid, whereby electrical energy flows into the fluid to ionize it.

In one embodiment of the present invention, the first electroconductive member is tubular and the second electroconductive member is a smaller diameter longitudinal member situated in the internal space of the first tubular member. The fluid flows through the space between the first and second members.

The electrical connection between the first electroconductive member and the second member is performed by the fluid at the entrance to the space between these members. This is provided by the electroconductivity of the fluid not subjected to ionization.

Others objects, features and advantages of the invention will be apparent from the following description of embodiments in accordance with the accompanying drawings.

Fig. 1 is a partially sectional view showing a basic structure of one embodiment of the device;

Fig. 2 is a sectional view showing the above device set in a pipe line;

Fig. 3 is a sectional view showing the above device set in a shower nozzle;

Fig. 4 is a partially sectional view showing the above device set in a watering can; and

Fig. 5 is a partially sectional perspective view showing a further embodiment of the device according to the present invention.

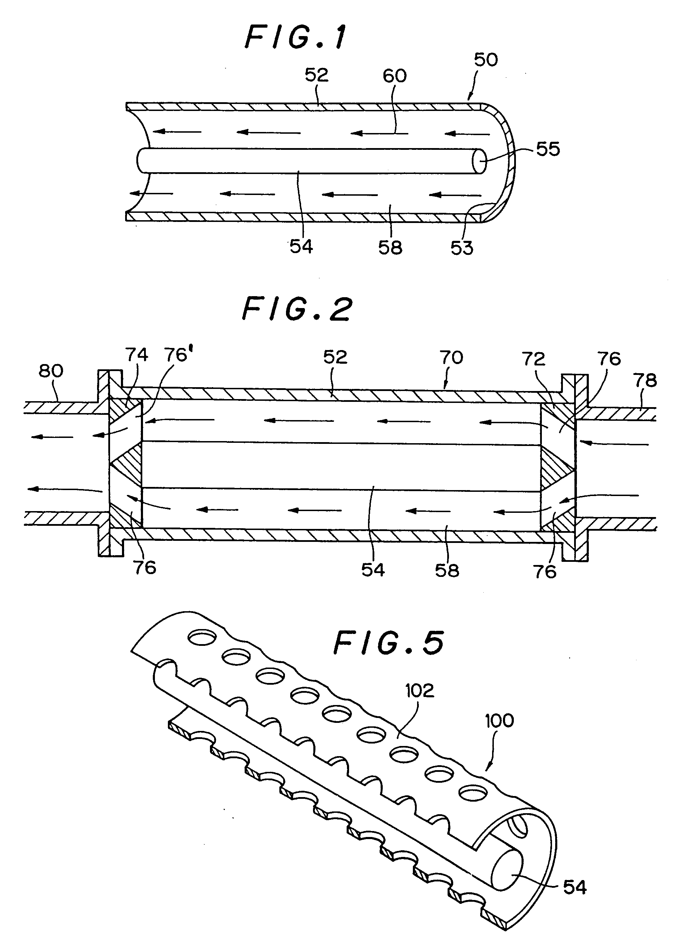

Fig. 1 shows a preferred embodiment of the device for ionization according to the present invention. This device 50 contains an open ended tubular member 52 made of aluminum. A rod member 54 made of carbon is longitudinally installed in the tubular member 52. Water 60 flows in the direction represented by the arrow through the annular space 58 defined between the tubular member 52 and the rod member 54. The rod member 54 forms the positive electrode, the aluminium tubular member 52 forms the negative electrode, and the water 60 flowing between both electrodes forms the electrolyte. As a flow of electric energy is passing through the circuit, the water is subjected to dissociation and ionization by the electric energy. The water 60 after passing through the device 50 retains its ionization state for a period of time.

Measurements of electric conductivity of ordinary tap water before entering the annular space 58 and water taken from the device 50 show a lower conductivity for the water taken from the device 50. This is in line with the charging of a secondary type battery wherein the liquid electrolyte increases in resistance to electric flow as the battery becomes charged. At initial connection to the charging circuit the charging current is high because of low electric resistance of the electrolyte. Then as charging progresses the charging current gradually falls due to increasing dissociation and ionization of the electrolyte providing increasing resistance to electric current flow. That is, the water taken from the device 50 providing a lower conductivity proves the ionization of the water as it progresses in the tubular member 52.

In various tests made to determine acceptable resistance values for electroconductive connection between the electrodes it was found that a wide range of resistance values could be used, even to the extent of leaving off a connecting lead and without a resistor being connected between the electrodes, dissociation and ionisation of the water was efficient. Further investigation showed that the internal resistance between the longitudinal member 34 and the tubular member 52 as the water 60 in normal condition entered the annular space 58 before it became dissociated and ionised was in effect equivalent to using an external electroconductive resistance.

The water after passing through the tubular member 52 of the device 50 is in a dissociated and ionized state, which is a highly activated condition. The ionized state of the water will gradually revert back to the neutral condition over a period of a few hours unless otherwise changed by contact with substances, compounds, or other conditions which will cause neutralization of the dissociation and ionization, such as the conversion of hard ferric oxide scale in water pipeline to the soft ferric hydroxide, and other scale deposits such as calcium and magnesium converted into soft calcium and magnesium compounds.

Fig. 2 shows an example wherein the device according to the present invention is installed in a pipe line. In this drawing, the same numerals denote the same or corresponding parts as the device shown in Fig. 1. In such a device 70 an aluminium tubular member 52 is provided with insulating supporting blocks 72 and 74 at both open ends of the tubular member 52. The supporting blocks 72 and 74 hold a rod shape member 54 in a central position and are formed with a plurality of through openings 76,76' around the central position. Both ends of this device 70 are connected to pipes 78 and 80 such as in a water pipeline system. The fluid such as water flows from the preceding pipe 78 to the annular space 58 through the openings 76 formed in the block 72 and is subjected to dissociation and ionization in the space 58, and then flows into the succeeding pipe 80 through the openings 76' formed in the block 74.

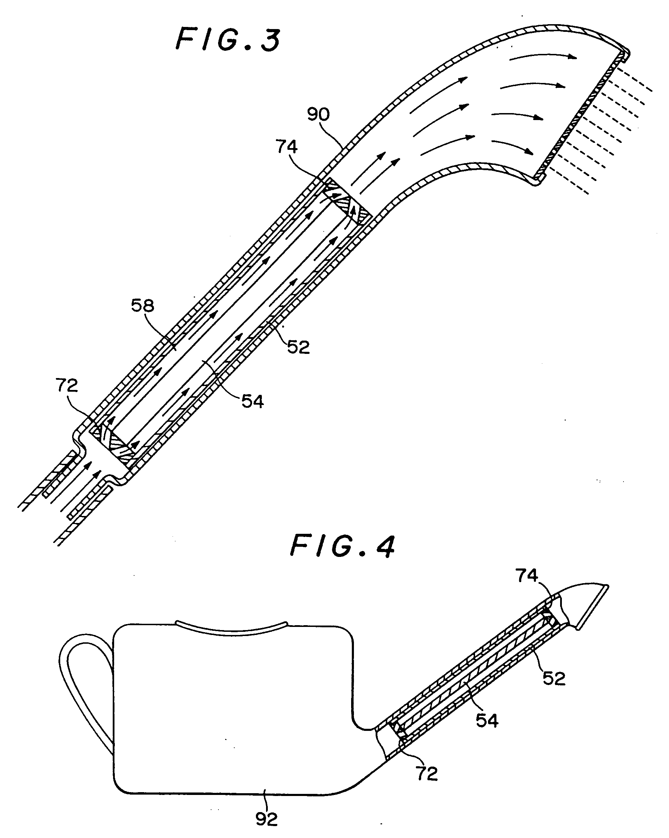

Fig. 3 shows an example wherein the similar device shown in Fig. 1 is set in a shower nozzle 90. The ionized water has a cleaning effect for oily substances. The water exiting from the nozzle 90 containing the ionizing device is ionized, and oily substances can be easily removed from the human body by this ionized water.

Fig. 4 shows an example wherein a similar device as the above is set in the neck section of watering can 92. According to this configuration the water fed from the watering can 92 is ionized. Since ionizing compounds or materials are added into soil to improve plant growth, the ionized water is supplied to the plants by using such constituted watering can 92 to improve their growing conditions.

Fig. 5 shows another embodiment of the device for ionization according to the present invention. This device 100 has substantially the same structure as the device shown in Fig. 4 except for the tubular member 52 which is replaced with a tubular member 102 with many through holes. This ionizing device 100 is suitable for ionization of water in a bath tub or soap solution in a washing machine by simply placing it therein.

It is pointed out that although carbon and aluminium have been specified for the electrodes in the above description of the present invention, other combinations of dissimilar electroconductive materials may be used, for example; carbon and zinc, copper and chrome, and so on.

## Claims

1. A method for ionizing an electroconductive fluid, said method comprising:
   providing a first electroconductive member and a second electroconductive member with an enclosed space therebetween, the first and second electroconductive members having different electrochemical potentials; flowing electroconductive fluid through the enclosed space between the first and second electroconductive members; forming an electroconductive connection between said first and second electroconductive members, thereby causing electrical energy to flow into the fluid to ionize it; characterized in that the electroconductive connection between the first and second electroconductive members is only through the electroconductive fluid.

2. A method as claimed in claim 1, wherein the step of providing the electroconductive members comprises providing a first electroconductive member that is tubular and a second electroconductive member extending substantially along the longitudinal axis of the first electroconductive member, and the step of electroconductively connecting the members consists of flowing the electroconductive fluid through an annular space defined between the first electroconductive member and the second electroconductive member.

3. A method as claimed in claim 1 or 2 wherein the electroconductive fluid is water.

4. A method as claimed in claim 1, 2 or 3, wherein the space between the electroconductive members is provided between an inlet for the fluid and a separate outlet for the fluid.

5. A method as claimed in claim 1, 2 or 3, wherein the electroconductive members are provided between an inlet for the fluid and a separate outlet for the fluid.

6. A method as claimed in claim 4, wherein the space between the electroconductive members is provided in a gap in a pipe line, the inlet and separate outlet being connected to respective ends of the pipe at the gap.

7. A method as claimed in claim 5, wherein the electroconductive members are provided in a gap in a pipe line, the inlet and separate outlet being connected to respective ends of the pipe at the gap.

8. A method as claimed in claim 4 or 5, wherein the electroconductive members are provided in a shower nozzle.

9. A method according to claim 4 or 5, wherein the electroconductive members are provided in the neck of a watering device.

10. A device for ionizing an electroconductive fluid, said device comprising:
    a negative electrode comprising a first electroconductive member (52);
    a positive electrode comprising a second electroconductive member (54), the first and second electroconductive members having an enclosed space (58) therebetween;
    an inlet (76) for electroconductive fluid into the said enclosed space; and
    a separate outlet (76') for electroconductive fluid from the said enclosed space;
    the first and second electroconductive members having different electrochemical potentials;
    wherein in use electroconductive fluid such as water flows through the said enclosed space (58); and
    wherein the only electroconductive connection between the first and second electroconductive members is through the fluid, whereby electrical energy flows into the fluid to ionize it.

11. A device as claimed in claim 10, wherein said first electroconductive member (52) is tubular, said second electroconductive member (54) extends along a longitudinal axis of the first electroconductive member (52) and has a cross-sectional area that is smaller than the cross-sectional area of the space (58) defined within said tubular first electroconductive member (52), and in use said fluid (60) flows through the annular space (58) defined between said electroconductive members.

12. A device as claimed in claim 10 or 11, wherein said positive electrode (54) is a carbon electrode and said negative electrode (52) is an aluminium electrode.

13. A device as claimed in claim 11 or 12, wherein said first electroconductive member (102) has a plurality of holes extending therethrough.

14. A pipe line comprising a device as claimed in any of claims 10 to 12.

15. A watering device comprising a device as claimed in claim 11 or 12.

16. A shower nozzle comprising a device as claimed in claim 11 or 12.

**Patentansprüche**

1. Verfahren zum Ionisieren eines elektrisch leitfähigen, fließfähigen Mediums, umfassend die Schritte
des Bereitstellens eines ersten elektrisch leitfähigen Bauelements und eines zweiten elektrisch leitfähigen Bauelements mit einem zwischen diesen eingeschlossenen Raum, wobei das erste und das zweite elektrisch leitfähige Bauelement unterschiedliche elektrochemische Potentiale haben;
des Fließenlassens des elektrisch leitfähigen, fließfähigen Mediums durch den eingeschlossenen Raum zwischen dem ersten und dem zweiten elektrisch leitfähigen Bauelement;
des Bildens einer elektrisch leitfähigen Verbindung zwischen dem ersten und dem zweiten elektrisch leitfähigen Bauelement, um dadurch elektrische Energie in das fließfähige Medium einströmen zu lassen, um dieses zu ionisieren, dadurch gekennzeichnet, daß die elektrisch leitfähige Verbindung zwischen dem ersten und dem zweiten elektrisch leitfähigen Bauelement nur über das elektrisch leitfähige, fließfähige Medium erfolgt.

2. Verfahren nach Anspruch 1, worin der Schritt des Bereitstellens der elektrisch leitfähigen Bauelemente das Bereitstellen eines ersten elektrisch leitfähigen Bauelements, das röhrenförmig ist, und das Bereitstellen eines zweiten elektrisch leitfähigen Bauelements umfaßt, das sich im wesentlichen entlang der Längsachse ersten elektrisch leitfähigen Bauelements erstreckt,
und der Schritt des elektrisch leitfähigen Verbindens der Bauelemente daraus besteht, daß man das elektrisch leitfähige fließfähige Medium durch einen ringförmigen Raum hindurchfließen läßt, der zwischen dem ersten elektrisch leitfähigen Bauelement und dem zweiten elektrischh leitfähigen Bauelement definiert ist.

3. Verfahren nach Anspruch 1 oder 2, worin das elektrisch leitfähige fließfähige Medium Wasser ist.

4. Verfahren nach Anspruch 1, 2 oder 3, worin der Raum zwischen den elektrisch leitfähigen Bauelementen zwischen einem Einlaß für das fließfähige Medium und einem getrennten Auslaß für das fließfähige Medium bereitgestellt wird.

5. Verfahren nach Anspruch 1, 2 oder 3, worin die elektrisch leitfähige Bauelemente zwischen einem Einlaß für das fließfähige Medium und einem getrennten Auslaß für das fließfähige Medium bereitgestellt werden.

6. Verfahren nach Anspruch 4, worin der Raum zwischen den elektrisch leitfähigen Bauelementen in einem Zwischenraum in einer Rohrleitung (Pipeline) bereitgestellt wird, wobei der Einlaß und der getrennte Auslaß mit jeweiligen Enden des Rohres an dem Zwischenraum verbunden sind.

7. Verfahren nach Anspruch 5, worin die elektrisch leitfähigen Bauelemente in einem Zwischenraum in einer Rohrleitung (Pipeline) bereitgestellt werden, wobei der Einlaß und der getrennte Auslaß mit jeweiligen Enden des Rohres an dem Zwischenraum verbunden sind.

8. Verfahren nach Anspruch 4 oder 5, worin die elektrisch leitfähigen Bauelemente in einer Brausedüse bereitgestellt werden.

9. Verfahren nach Anspruch 4 oder 5, worin die elektrisch leitfähigen Bauelemente im Ansatz einer Bewässerungsvorrichtung bereitgestellt werden.

**10.** Vorrichtung zum Ionisieren eines elektrisch leitfähigen, fließfähigen Mediums, umfassend eine ein erstes elektrisch leitfähiges Bauelement umfassende negative Elektrode (52); eine ein zweites elektrisch leitfähiges Bauelement umfassende positive Elektrode (54); wobei das erste und das zweite elektrisch leitfähige Bauelement einen zwischen ihnen eingeschlossenen Raum (58) haben; einen Einlaß (76) für ein elektrisch leitfähiges, fließfähiges Medium in diesen geschlossenen Raum hinein; und einen getrennten Auslaß (76') für das elektrisch leitfähige, fließfähige Medium aus diesem geschlossenen Raum heraus; wobei das erste und das zweite elektrisch leitfähige Bauelement unterschiedliche elektrochemische Potentiale haben; worin beim Gebrauch ein elektrisch leitfähiges, fließfähiges Medium wie Wasser durch den genannten eingeschlossenen Raum (58) hindurchfließt; und wobei die einzige elektrisch leitfähige Verbindung zwischen dem ersten und dem zweiten elektrisch leitfähigen Bauelement diejenige das elektrisch leitfähige, fließfähige Medium ist, wodurch elektrische Energie in das fließfähige Medium strömt, um es zu ionisieren.

**11.** Vorrichtung nach Anspruch 10, worin das erste elektrisch leitfähige Bauelement (52) röhrenförmig ist, das zweite elektrisch leitfähige Bauelement (54) sich entlang der Längsachse des ersten elektrisch leifähigen Bauelements erstreckt und einen Querschnitt besitzt, der kleiner ist als der Querschnitt des Raums (58), der innerhalb des röhrenförmigen ersten elektrisch leitfähigen Bauelements (52) definiert ist, und worin beim Gebrauch das fließfähige Medium (60) durch den ringförmigen Raum (58) hindurchfließt, der zwischen den genannten elektrisch leitenden Bauelementen definiert ist.

**12.** Vorrichtung nach Anspruch 10 oder 11, worin die positive Elektrode (54) eine Kohlenstoff-Elektrode ist und die negative Elektrode (52) eine ALuminium-Elektrode ist.

**13.** Vorrichtung nach Anspruch 11 oder 12, worin das erste elektrisch leitfähige Element (102) eine Vielzahl von durch dieses hindurch gehenden Löchern aufweist.

**14.** Rohrleitung (Pipeline), umfassend eine Vorrichtung nach irgendeinem der Ansprüche 10 bis 12.

**15.** Bewässerungsvorrichtung, umfassend eine Vorrichtung nach Anspruch 11 oder 12.

**16.** Brausedüse, umfassend eine Vorrichtung nach Anspruch 11 oder 12.

**Revendications**

**1.** Méthode pour ioniser un liquide conducteur de l'électricité, cette méthode comprenant : la mise en oeuvre d'un premier élément conducteur de l'électricité et d'un second élément conducteur de l'électricité avec un espace enfermé entre eux, le premier et le second élément conducteurs de l'électricité ayant des potentiels électrochimiques différents; l'écoulement du liquide conducteur de l'électricité à travers l'espace enfermé entre le premier et le second élément conducteurs de l'électricité; la formation d'une connexion conductrice de l'électricité entre le premier et le second élément conducteurs de l'électricité, causant ainsi le passage d'énergie électrique dans le liquide pour l'ioniser; caractérisé en ce que la connexion conductrice de l'électricité entre le premier et le second élément conducteurs de l'électricité se fait uniquement à travers le liquide conducteur de l'électricité.

**2.** Méthode analogue à celle de la revendication 1, dans laquelle la phase de mise en oeuvre du conducteur de l'électricité comprend la mise en oeuvre d'un premier élément conducteur de l'électricité tubulaire et d'un second élément conducteur de l'électricité s'étendant pratiquement le long de l'axe longitudinal du premier élément conducteur de l'électricité, et la phase de connexion conductrice de l'électricité entre les éléments consiste à faire circuler le liquide conducteur de l'électricité à travers un espace annulaire défini entre le premier élément conducteur de l'électricité et le second élément conducteur de l'électricité.

**3.** Méthode analogue à celle des revendications 1 ou 2, dans laquelle le liquide conducteur de l'électricité est de l'eau.

**4.** Méthode analogue à celle des revendications 1, 2 ou 3, dans laquelle l'espace entre les éléments conducteurs de l'électricité est disposé entre une entrée pour le liquide et une sortie séparée pour le liquide.

**5.** Méthode analogue à celle des revendications 1, 2 ou 3, dans laquelle les éléments conducteurs de l'électricité sont disposés entre une entrée pour le liquide et une sortie séparée pour le liquide.

6. Méthode analogue à celle de la revendication 4, dans laquelle l'espace entre les éléments conducteurs de l'électricité est disposé dans une coupure d'une canalisation, l'entrée et la sortie séparée étant connectées aux extrémités respectives de la canalisation à la coupure.

7. Méthode analogue à celle de la revendication 5, dans laquelle les éléments conducteurs de l'électricité sont disposés dans une coupure de canalisation, l'entrée et la sortie séparée étant connectées aux extrémités respectives de la canalisation à la coupure.

8. Méthode analogue à celle des revendications 4 ou 5, dans laquelle les éléments conducteurs de l'électricité sont disposés dans un ajutage de douche.

9. Méthode selon la revendication 4 ou 5, dans laquelle les éléments conducteurs de l'électricité sont disposés dans l'étranglement d'un dispositif d'arrosage.

10. Dispositif pour ioniser un liquide conducteur de l'électricité, ce dispositif comprenant :

une électrode négative comprenant un premier élément conducteur de l'électricité (52);

une électrode positive comprenant un second élément conducteur de l'électricité (54), le premier et le second éléments conducteurs de l'électricité ayant un espace enfermé (58) entre eux;

une entrée (76) permettant au liquide conducteur de l'électricité de pénétrer dans cet espace enfermé; et

une sortie séparée (76') pour le liquide conducteur de l'électricité de cet espace enfermé

le premier et le second éléments conducteurs de l'électricité ayant des potentiels électrochimiques différents;

dans l'utilisation duquel le liquide conducteur de l'électricité tel que de l'eau coule à travers ledit espace enfermé (58); et

dans lequel la seule connexion conductrice de l'électricité entre le premier et le second élément conducteurs de l'électricité se fait à travers le liquide, de l'énergie électrique pénétrant dans le fluide pour l'ioniser.

11. Dispositif analogue à celui de la revendication 10, dans lequel le premier élément conducteur de l'électricité (52) est tubulaire, ledit second élément conducteur de l'électricité (54) s'étend le long d'un axe longitudinal du premier élément conducteur de l'électricité (52) et a une section transversale plus faible que la section transversale de l'espace (58) défini dans ledit premier élément conducteur de l'électricité tubulaire (52), et en utilisation ledit fluide (60) circule à travers l'espace annulaire (58) défini entre lesdits éléments conducteurs de l'électricité.

12. Dispositif analogue à celui des revendications 10 ou 11, dans lequel ladite électrode positive (54) est une électrode en carbone et ladite électrode négative (52) est une électrode en aluminium.

13. Dispositif analogue à celui des revendications 11 ou 12, dans lequel ledit premier élément conducteur de l'électricité (102) est traversé par plusieurs trous.

14. Canalisation comprenant un dispositif analogue à celui des revendications 10 à 12.

15. Dispositif d'arrosage comprenant un dispositif analogue à celui des revendications 11 ou 12.

16. Ajutage de douche comprenant un dispositif analogue à celui des revendications 11 ou 12.

## FIG.1

## FIG.2

## FIG.5

FIG.3

90

74

58

52

54

72

FIG.4

74

52

54

72

92